# FASCICULE DE BREVET EUROPEEN

(11) **EP 4 518 663 B1**
(45) Date de publication et mention de la délivrance du brevet: **17.12.2025**
(21) Numéro de dépôt: 23724762.2
(22) Date de dépôt: 03.05.2023
(51) Int. Cl.: A01P 17/00, A01P 11/00, A01N 37/02, A01N 37/04, A01N 37/06

(54) **LUTTE CONTRE LES RONGEURS PAR SIMULATION OLFACTIVE ALTERNÉE**
NAGETIERBEKÄMPFUNG DURCH ALTERNATIVE OLFAKTORISCHE SIMULATION
RODENT CONTROL BY ALTERNATE OLFACTORY SIMULATION

(30) Priorité: 03.05.2022 FR 2204206
(43) Date de publication de la demande: 12.03.2025
(73) Titulaire: Melchior Material and Life Science France, 64170 Lacq (FR)
(72) Inventeur: GUERRET, Olivier, 46170 Pern (FR)
(74) Mandataire: Regimbeau
(86) Numéro de dépôt international: PCT/EP2023/061723
(87) Numéro de publication internationale: WO 2023/213910

(56) Documents cités:
- WO-A1-2012/173701
- WO-A1-2013/003946
- WO-A1-2014/133156
- WO-A1-2017/096485
- WO-A1-2022/036444
- YANCEY M ET AL: "Urinary profiles of organic acids and volatile metabolites during the starvation process in rats", JOURNAL OF CHROMATOGRAPHY B, ELSEVIER SCIENCE PUBLISHERS, NL, vol. 382, 1 January 1986 (1986-01-01), pages 19 - 30, XP026792212, ISSN: 0378-4347, [retrieved on 19860101]
- SKAU ET AL: "X-ray Diffraction Data for Some Amine Salts of Long-Chain Fatty Acids and Related Compounds", vol. 25, no. 17, 1 January 1980 (1980-01-01), pages 305 - 307, XP055823690, Retrieved from the Internet <URL:https://pubs.acs.org/doi/pdf/10.1021/je60087a037>
- OSADA KAZUMI ET AL: "Structure-Activity Relationships of Alkylpyrazine Analogs and Fear-Associated Behaviors in Mice", JOURNAL OF CHEMICAL ECOLOGY, SPRINGER, NL, vol. 43, no. 3, 28 February 2017 (2017-02-28), pages 263 - 272, XP036200419, ISSN: 0098-0331, [retrieved on 20170228], DOI: 10.1007/S10886-017-0822-3
- ANON. L: "Stearic Acid and Related Fatty Acids and Rodents Away Odor Free", 5 February 2020 (2020-02-05), pages 1 - 25, XP055954807, Retrieved from the Internet <URL:https://publications.gc.ca/collections/collection_2020/sc-hc/h113-9/H113-9-2020-2-eng.pdf> [retrieved on 20220825]

## Description

### DOMAINE TECHNIQUE DE L'INVENTION

La présente invention concerne une composition phéromonale comprenant une phéromone (a) choisie parmi les acides gras, les diacides aliphatiques non cycliques, les esters éthyliques ou méthyliques des acides gras, les esters éthyliques et/ou méthyliques des diacides aliphatiques non cycliques, et leurs mélanges ; et un composant (b) choisi parmi la 2-phényléthylamine, les pyrazines substituées par 1, 2, 3 ou 4 groupes (C₁-C₆)alkyle, le 2-propylthiétane, la 2,5-dihydro-2,4,5-triméthylthiazoline, la 4,5-dihydro-2-*sec*-butyl-thiazoline, et leurs mélanges.

Elle concerne également un article imprégné avec une telle composition et son procédé de préparation, ainsi que l'utilisation d'une telle composition ou d'un article imprégné avec une telle composition pour lutter contre les rongeurs. Elle concerne en particulier une méthode de lutte contre les rongeurs utilisant une diffusion alternée de phéromones (mélanges de phéromone (a) et de composant (b)) de différents prédateurs des rongeurs tels que les félins, les canidés, les serpents, ou les mustélidés, permettant de créer une simulation olfactive alternée (SOA) de la présence de ces prédateurs qui éloigne les rongeurs de l'espace ou des objets à protéger.

Elle concerne également un kit utilisable dans une telle méthode de lutte contre les rongeurs par SOA, un tel kit comprenant au moins deux compositions phéromonales selon l'invention comprenant des mélanges phéromonaux (constitués de la phéromone (a)et du composant (b)) différents ou plusieurs articles imprégnés, dont aux moins articles sont imprégnés avec des compositions phéromonales selon l'invention comprenant des mélanges phéromonaux différents.

### ETAT DE LA TECHNIQUE

Les rongeurs sont une nuisance dans de nombreux aspects tant économiques que sanitaires. Ils peuvent endommager des installations électriques, des isolants thermiques dans des constructions et peuvent abîmer des denrées stockées tant dans des silos que dans leurs divers conditionnements. Outre ces dégâts économiques, les rongeurs sont aussi porteurs de maladies transmissibles aux autres animaux mais aussi à l'être humain telles que la salmonellose, la leptospirose, la borréliose, le typhus, l'encéphalite, la méningite, la chorioméningite, l'hantavirus, le virus Erve, le THAV comme citées dans FR2962006A1.

La lutte contre les rongeurs est un exercice auquel l'homme s'est employé depuis toujours. Les techniques employées constituent l'arsenal de la dératisation qui est une activité économique importante dans tous les pays et dans toutes les activités humaines. Elle peut cibler la protection d'espaces de vie ou de stockage comme la protection des champs ravagés par les rats taupiers. Cependant, les techniques employées à ce jour souffrent de différents problèmes.

Les deux techniques les plus populaires sont probablement l'utilisation d'appâts empoisonnés et le piégeage.

Les appâts empoisonnés (voir par exemple FR2839421A1) avec des anticoagulants posent tout d'abord des problèmes sanitaires et écologiques. En effet, lorsqu'un rongeur mange un appât empoisonné, il meurt généralement plus tard à un endroit qui n'est pas forcément repérable ce qui peut engendrer des nuisances liées à la décomposition du corps. Par ailleurs, un rat empoisonné peut lui-même être dévoré par un prédateur, oiseau ou mammifère, sauvage ou domestique, qui à son tour peut mourir d'empoisonnement. Cette technique peut donc avoir un effet néfaste sur la biodiversité : il a d'ailleurs été constaté lors de campagnes de dératisation dans des prairies, une raréfaction des oiseaux de proies comme les buses ou les hiboux (Michael Coeurdassier, et al. Fourrages, 2014, 327-335).

Le piégeage (léthal ou non) permet de répondre à ces deux problèmes puisque le corps du rongeur piégé peut être détruit. Ainsi, des pièges ou des répulsifs sonores ou alimentaires ont été développés pour lutter contre les rats (voir par exemple : USD768806, WO2010/106352, EP1691602, US10212928, US10143193, US2021/0360899).

Cependant, ces piégeages ont un effet limité car leur capacité se limite généralement à un rongeur par piège et à moins de relever le piège régulièrement ou d'en utiliser un grand nombre, cette solution ne peut contrer une invasion de rats ou de souris dans un hangar par exemple.

Un autre phénomène rend ces techniques difficilement durables : la capacité d'apprentissage des populations de rongeurs qui rend caduque un système de lutte dans un espace après un certain temps. En effet, il est connu que les rats peuvent apprendre à éviter un appât ou un piège grâce aux premiers individus piégés qui transmettent une information sonore ou olfactive à leurs congénères (Lee, H. et Kim, J. J. J. Neurosci. 1998, 18(20), 8444-8454).

Enfin, les substances répulsives utilisées sont souvent toxiques pour l'homme et/ou l'environnement et donc d'un usage limité (US2011/0008264).

Il est donc d'un intérêt économique important de pouvoir développer des techniques de lutte contre les rongeurs plus efficaces, durables et respectueuses de l'environnement.

De manière surprenante, la demanderesse a démontré qu'il était possible de lutter efficacement contre les rongeurs en utilisant des mélanges de phéromones telles que des phéromones de marquage territorial de prédateurs autochtones des rongeurs et des phéromones d'alarme des rongeurs (rats, souris) et en alternant dans le temps ces mélanges pour éviter tout phénomène d'accoutumance et d'apprentissage. Cette association des deux types de phéromones permet une action efficace et prolongée dans le temps, en utilisant en outre des quantités moindres des phéromones, limitant ou évitant ainsi leur impact toxique potentiel.

Plusieurs classes de composants des phéromones de marquage territorial ont été identifiées dans la littérature. Ces composants peuvent être classés en 4 grandes familles.

La famille I comprend les acides gras lourds, faiblement volatils et leurs esters. Plus particulièrement, cette famille comprend les phéromones territoriales de prédateurs de rongeurs composées de mélange précis d'acide gras ou de leurs esters. Ces mélanges sont spécifiques de chaque espèce ou sous-espèce. Ces composés sont généralement présents sur les poils des prédateurs, telles que les phéromones faciales de félins, et peuvent être utilisés pour un marquage territorial par frottement contre un support. Ainsi, les phéromones sont généralement identifiées en analysant les mélanges de substances grasses présentes sur les poils des animaux. Ces mélanges sont faiblement volatils et ont une capacité de marquage du territoire longue. Il est considéré que ces phéromones permettent d'identifier un espace de vie du prédateur en question comme un terrier, une tanière ou tout autre habitat. De telles phéromones sont décrites notamment dans EP0724832 ; Soini, H. A. et al. Journal of Chemical Ecology 2012, 38(2), 145-156 ; Van den Berghe, F. et al. Plos One 2019, 14(3), e0212551 ; Arnould, C. et al. Journal of Chemical Ecology 1998, 24(3), 559-576.

La famille II comprend des dérivés aminés tels que la 2-phényléthylamine, ou encore des pyrazines telles que la 2,5-diméthylpyrazine, la 2,6-diméthyl pyrazine, la 2,3,5-triméthyl pyrazine, la 3-éthyl-2,5-dimethylpyrazine, la 2,3-diméthylpyrazine, ou la 2,3-diméthyl-5-éthylpyrazine. Ces composés sont généralement présents dans les fèces de prédateurs comme le renard, les grands félins, les mustélidés. De telles phéromones sont décrites notamment dans Villalobos, A. *et al. Pest. Manag. Sci.* 2022, 78, 1677. Bien que les pyrazines aient pu être décrites comme induisant des comportements associés à la peur chez la souris (Osada et al., Journal of Chemical Ecology 2017, 43(3), 263-272), cette activité est limitée dans le temps car ces composés sont volatils. À titre d'exemple, les diéthylpyrazines ont des points d'ébullition d'environ 190 °C à pression atmosphérique, par conséquent, leur effet ne peut être durable. De plus, ces composés doivent souvent être utilisés à des concentrations élevées pour être efficace, ce qui limite leur utilisation à cause de leur toxicité (WO 2014/133156A1). WO 2014/133156A1 décrit l'utilisation de pyrazines comme répulsif d'un mammifère ayant un bulbe olfactif accessoire comme les rongeurs. Certaines molécules de cette famille, comme la 2-phényléthylamine, ont pu être utilisées dans des méthodes de contrôle des rongeurs. Par exemple, WO 2012/173701 A1 décrit une méthode de contrôle de rongeurs utilisant une composition comprenant un ligand du récepteur TAAR (olfactory trace amine associated receptor) tel que la 2 phényléthylamine. Néanmoins, à la connaissance de la Demanderesse, elles n'ont jamais été décrites en synergie avec une autre phéromone. La famille III comprend des dérivés soufrés tels que le 2-propylthiétane. Il s'agit par exemple de molécules sécrétées par les glandes anales de diverses espèces comme les furets, les martes, les fouines, ou les putois. De telles phéromones sont décrites notamment dans Clapperton, B. K. et al. Animal Behaviour 1998, 36(2), 541-553.

La famille IV comprend un seul composé, à savoir la 2,5-dihydro-2,4,5-trimethylthiazoline (TMT), substance présente dans les fèces de renard et qui a la particularité d'être très voisine des phéromones d'alarme des souris telles que la 2-sec-butyl-4,5-dihydrothiazoline (SBT). Elle comporte en outre les caractéristiques de la famille II et de la famille III. Elle est décrite dans Brechbühl J. et al. Proc. Natl. Acad. Sci. U.S.A. 2013, 110(12), 4762 ; Vernet-Maury E. et al. J. Chem. Ecol. 1984, 10(7), 1007-1018 ; Wallace K.J. et Rosen J.B. Behav. Neurosci. 2000, 114(5), 912-922 ; Kobayakawa K. et al. Nature 2007, 450, 503-508.

Les modes d'action de ces odeurs sur le cerveau des souris sont assez spécifiques : les substances issues des glandes anales ou présents dans les urines ou les fèces des prédateurs (familles II, III et IV) sont souvent associées à un terrain de chasse du prédateur généralement très vastes. Au contraire, les phéromones présentes sur les poils des prédateurs telles que des phéromones faciales (famille I) sont, quant à elles, liées à des territoires de vie (tanière, litière, pièce à vivre pour les chats par exemple). Or, les rongeurs n'ont pas une réaction de peur aussi intense en présence des odeurs de territoire de chasse qu'en présence des odeurs corporelles du prédateur (Clapperton, B. K., Elaine C. M., et Hussam A. R. « Mammalian Pheromones - new Opportunities for Improved Predator Control in New Zealand ». Publishing Team, Department of Conservation, 2017). Ce phénomène résulte d'une appréciation intuitive de la réalité du risque : le territoire de chasse d'un prédateur n'est pas constamment habité et les rongeurs comprennent que ces odeurs, lorsqu'elles sont en déclin, ne traduisent pas un danger immédiat. Au contraire, des phéromones corporelles déposées par frottis, qui sont assez fugaces, impliquent un danger proche.

En outre, les phéromones d'alarme de rongeurs permettent de conditionner les autres individus de l'espèce à une situation ou un stimulus associable à un danger imminent (Carew, S. J. et al. Scientific reports 2018, 8(1), 1-10).

US9918472 décrit l'utilisation d'hétérocycles à 3 à 7 chaînons particuliers de structure proche de la TMT (2,5-dihydro-2,4,5-triméthylthiazoline) comme répulsifs d'animaux tels que les rongeurs. Toutefois, les molécules identifiées ne correspondent pas à des odeurs de prédateurs de rongeurs, seules ou en mélange.

### RESUME DE L'INVENTION

La demanderesse a ainsi découvert de nouvelles formulations combinant des phéromones de prédateurs et leur utilisation dans la lutte contre les rongeurs. Ces combinaisons ont pour effet non seulement de repousser les rongeurs dans la durée mais aussi d'éviter un effet d'accoutumance, ce qui est surprenant.

La présente invention a ainsi pour objet une composition phéromonale, plus particulièrement destinée à éloigner des rongeurs, comprenant :
(a) une phéromone (a) choisie parmi les acides gras, les diacides aliphatiques non cycliques, les esters éthyliques ou méthyliques des acides gras, les esters éthyliques et/ou méthyliques des diacides aliphatiques non cycliques, et leurs mélanges ; et
(b) un composant (b) choisi parmi la 2-phényléthylamine, les pyrazines substituées par 1, 2, 3 ou 4 groupes (C₁-C₆)alkyle (par exemple la 2,5-diméthylpyrazine, la 2,6-diméthylpyrazine, la 2,3,5-triméthylpyrazine, la 3-éthyl-2,5-diméthylpyrazine, la 2,3-diméthylpyrazine, la 2,3-diméthyl-5-éthylpyrazine), le 2-propylthiétane, la 2,5-dihydro-2,4,5-triméthylthiazoline, la 4,5-dihydro-2-sec-butyl-thiazoline, et leurs mélanges. De préférence, la composition phéromonale comprend :
   (a) 6,0 % à 12,0 %, notamment environ 10,0 %, en poids, par rapport au poids total de la composition, d'un mélange d'azélate de diméthyle, de pimélate de diméthyle, d'acide caprique, d'acide laurique, de palmitate d'éthyle et d'oléate d'éthyle ; ou
      6,0 % à 12,0 %, notamment environ 10,0 %, en poids, par rapport au poids total de la composition, d'un mélange d'acide caprique, de laurate d'éthyle ou d'acide laurique, de myristate d'éthyle, de pentadécanoate d'éthyle, de palmitate d'éthyle, d'oléate d'éthyle, et de linoléate d'éthyle ;
   (b) 100 ppm à 5000 ppm, en particulier 500 ppm à 2000 ppm, par exemple environ 1000 ppm, par rapport au poids total de la composition, d'un composant (b) choisi pami la 2-phényléthylamine, les pyrazines substituées par 1, 2, 3 ou 4 groupes (C₁-C₆)alkyle, et leurs mélanges ; ou
      0,001 ppm à 50 ppm, en particulier 0,005 ppm à 10 ppm, plus particulièrement 0,05 ppm à 5 ppm, par exemple environ 1 ppm, par rapport au poids total de la composition, d'un composant (b) choisi pami le 2-propylthiétane, la 2,5-dihydro-2,4,5-triméthylthiazoline, et la 4,5-dihydro-2-sec-butyl-thiazoline ; et
   (c) éventuellement un ou plusieurs solvants.

Une telle composition pour la lutte contre les rongeurs associe donc différents types de phéromones de marquage territorial (d'habitat et/ou de chasse) de prédateurs des rongeurs tels que les félins, les canidés, les serpents, ou encore les mustélidés ou associe une ou plusieurs phéromones de marquage territorial de prédateurs des rongeurs avec une phéromone d'alarme de rongeur. Ces compositions sous forme de mélange de phéromones permettent de toucher différentes zones du cerveau des rongeurs ce qui peut expliquer que les rongeurs ne s'habituent pas à ces odeurs qui gardent de fait un effet répulsif permanent.

La présente invention concerne également un article imprégné avec une composition selon l'invention.

Un tel article imprégné peut être préparé par un procédé de préparation, objet de la présente invention, comprenant l'imprégnation de l'article avec une composition selon l'invention, et plus particulièrement une composition selon l'invention comprenant un ou plusieurs solvants, à savoir une composition comprenant la phéromone (a), le composant (b) et un ou plusieurs solvants.

La présente invention a également pour objet l'utilisation d'une composition selon l'invention ou d'un article imprégné selon l'invention, pour lutter contre les rongeurs.

En effet, le mélange phéromonal compris dans ces compositions ou ces articles imprégnés agit comme un répulsif vis-à-vis des rongeurs. Il simule la présence d'un réseau de traces de prédateurs de rongeurs par l'utilisation de phéromones de marquage territorial (d'habitat et/ou de chasse) desdits prédateurs et/ou de phéromones d'alarme de rongeur. Une telle utilisation n'est donc pas léthale pour les rongeurs et ne présente aucune toxicité pour l'homme ou l'environnement.

La présente invention a également pour objet une méthode de lutte contre les rongeurs comprenant :
(1) l'application d'une composition C₁ selon l'invention ou le dépôt d'un article imprégné avec une composition C₁ selon l'invention dans un espace ou sur un objet à protéger contre les rongeurs ; et
(2) optionnellement la réitération de l'étape (1) une ou plusieurs fois, dans un délai de 1 à 90 jours, de préférence de 7 à 35 jours, après l'étape précédente.

Avantageusement, l'étape (2) est mise en œuvre et comprend N-1 réitération(s) réalisée(s) chacune indépendamment avec une composition Cᵢ selon l'invention ou un article imprégné avec une composition Cᵢ selon l'invention, les compositions C₁ à C_{N} étant différentes les unes des autres, c'est-à-dire que le mélange phéromonal constitué par la phéromone (a) et le composant (b) est différent d'une composition à l'autre.

En utilisant des mélanges phéromonaux différents, il est possible de simuler, de manière alternée, la présence de différents types de prédateurs des rongeurs, tels que des félins (e.g. chat), canidés (e.g. chien, renard ou loup), serpents, ou mustélidés. Les phéromones de marquage du territoire peuvent également être associées à une phéromone d'alarme de rongeur (phéromone libérée par un rongeur lorsqu'il est attaqué par un prédateur) pour renforcer le message de stress. Cette méthode par Simulation Olfactive Alternée (SOA) de la présence de prédateurs permet d'éviter tout phénomène d'accoutumance et d'apprentissage des rongeurs permettant de maintenir l'efficacité de la méthode dans le temps.

Une telle méthode par SOA peut être mise en œuvre à l'aide d'un kit, objet de la présente invention, comprenant :
- au moins deux compositions selon l'invention, le mélange phéromonal constitué de la phéromone (a) et du composant (b) de chacune des compositions étant différent d'une composition à l'autre, ou
- plusieurs articles imprégnés selon l'invention, au moins deux articles étant imprégnés avec un mélange phéromonal, constitué de la phéromone (a) et du composant (b), différent d'un article à l'autre.

L'utilisation des compositions selon l'invention dans une méthode par SOA renforce le caractère durable des formulations en simulant de manière alternée la présence de différents prédateurs de rongeurs dans un espace à protéger.

### DESCRIPTION DETAILLEE DE L'INVENTION

### Composition phéromonale

La présente invention a donc pour objet une composition phéromonale comprenant :
(a) une phéromone (a) choisie parmi les acides gras, les diacides aliphatiques non cycliques, les esters éthyliques ou méthyliques des acides gras, les esters éthyliques et/ou méthyliques des diacides aliphatiques non cycliques, et leurs mélanges ; et
(b) un composant (b) choisi parmi la 2-phényléthylamine, les pyrazines substituées par 1, 2, 3 ou 4 groupes (C₁-C₆)alkyle (par exemple la 2,5-diméthylpyrazine, la 2,6-diméthylpyrazine, la 2,3,5-triméthylpyrazine, la 3-éthyl-2,5-diméthylpyrazine, la 2,3-diméthylpyrazine, la 2,3-diméthyl-5-éthylpyrazine), le 2-propylthiétane, la 2,5-dihydro-2,4,5-triméthylthiazoline, la 4,5-dihydro-2-sec-butyl-thiazoline, et leurs mélanges.

De préférence, la composition phéromonale comprend :
(a) 6,0 % à 12,0 %, notamment environ 10,0 %, en poids, par rapport au poids total de la composition, d'un mélange d'azélate de diméthyle, de pimélate de diméthyle, d'acide caprique, d'acide laurique, de palmitate d'éthyle et d'oléate d'éthyle ; ou
   6,0 % à 12,0 %, notamment environ 10,0 %, en poids, par rapport au poids total de la composition, d'un mélange d'acide caprique, de laurate d'éthyle ou d'acide laurique, de myristate d'éthyle, de pentadécanoate d'éthyle, de palmitate d'éthyle, d'oléate d'éthyle, et de linoléate d'éthyle ;
(b) 100 ppm à 5000 ppm, en particulier 500 ppm à 2000 ppm, par exemple environ 1000 ppm, par rapport au poids total de la composition, d'un composant (b) choisi pami la 2-phényléthylamine, les pyrazines substituées par 1, 2, 3 ou 4 groupes (C₁-C₆)alkyle, et leurs mélanges ; ou
   0,001 ppm à 50 ppm, en particulier 0,005 ppm à 10 ppm, plus particulièrement 0,05 ppm à 5 ppm, par exemple environ 1 ppm, par rapport au poids total de la composition, d'un composant (b) choisi pami le 2-propylthiétane, la 2,5-dihydro-2,4,5-triméthylthiazoline, et la 4,5-dihydro-2-sec-butyl-thiazoline ; et
(c) éventuellement un ou plusieurs solvants.

La phéromone (a) vise à simuler une phéromone de marquage territorial d'habitat d'un prédateur d'un rongeur, à savoir une substance sécrétée par un tel prédateur pour marquer son territoire d'habitat.

Par « rongeur », on entend en particulier un rat ou une souris.

Par « prédateur » d'un rongeur, on entend en particulier un félin (e.g. chat), un canidé (e.g. chien, renard, loup), un serpent ou encore un mustélidé (e.g. fouine, furet, vison).

Selon la composition de la phéromone (a), il sera ainsi possible de simuler la présence de différents prédateurs.

Par « acides gras », on entend, au sens de la présente invention, un acide carboxylique de formule R1-COOH dans laquelle R1 représente une chaîne hydrocarbonée saturée ou insaturée, linéaire ou ramifiée, de préférence linéaire, l'acide carboxylique comprenant de 4 à 22, en particulier de 6 à 22, de préférence de 8 à 20, et encore de préférence de 10 à 18, atomes de carbone (incluant l'atome de carbone de la fonction COOH). Lorsque la chaîne hydrocarbonée est insaturée, elle comprend de préférence 1, 2 ou 3 doubles liaisons C=C. Il pourra s'agir en particulier de l'acide caprique, l'acide laurique, l'acide myristique, l'acide pentadécanoïque, l'acide palmitique, l'acide oléique, ou l'acide linoléique.

Ainsi, l'acide gras sera avantageusement choisi parmi l'acide caprique, l'acide laurique, l'acide myristique, l'acide pentadécanoïque, l'acide palmitique, l'acide oléique, l'acide linoléique, et leurs mélanges.

Par « diacide aliphatique non cyclique », on entend, au sens de la présente invention, un diacide carboxylique de formule HOOC-R2-COOH dans laquelle R2 représente une chaîne hydrocarbonée saturée ou insaturée, linéaire ou ramifiée, de préférence linéaire, le diacide carboxylique comprenant de 4 à 16, en particulier de 6 à 14, de préférence de 6 à 12, et encore de préférence de 6 à 10, atomes de carbone (incluant les 2 atomes de carbone des 2 fonctions COOH). Lorsque la chaîne hydrocarbonée est insaturée, elle comprend de préférence 1, 2 ou 3 doubles liaisons C=C. La chaîne hydrocarbonée sera avantageusement saturée Il pourra s'agir en particulier de l'acide azélaïque, ou l'acide pimélique.

Ainsi, le diacide aliphatique non cyclique sera avantageusement choisi parmi l'acide azélaïque, l'acide pimélique, et leurs mélanges.

Selon un mode de réalisation particulier, la phéromone (a) comprend de l'acide caprique, du caprate de méthyle, du caprate d'éthyle, de l'acide laurique, du laurate de méthyle, du laurate d'éthyle, de l'acide myristique, du myristate de méthyle, du myristate d'éthyle, de l'acide palmitique, du palmitate de méthyle, du palmitate d'éthyle, ou un mélange de ceux-ci.

Selon un autre mode de réalisation particulier, la phéromone (a) comprend de l'acide azélaïque, de l'azélate de diméthyle, de l'azélate de diéthyle, de l'azélate de méthyle et d'éthyle, de l'acide pimélique, du pimélate de diméthyle, du pimélate de diéthyle, du pimélate de méthyle et d'éthyle, ou un mélange de ceux-ci.

Selon encore un autre un mode de réalisation particulier, la phéromone (a) comprend :
- de l'acide caprique, du caprate de méthyle, du caprate d'éthyle, de l'acide laurique, du laurate de méthyle, du laurate d'éthyle, de l'acide myristique, du myristate de méthyle, du myristate d'éthyle, de l'acide palmitique, du palmitate de méthyle, du palmitate d'éthyle, ou un mélange de ceux-ci, et
- de l'acide azélaïque, de l'azélate de diméthyle, de l'azélate de diéthyle, de l'azélate de méthyle et d'éthyle, de l'acide pimélique, du pimélate de diméthyle, du pimélate de diéthyle, du pimélate de méthyle et d'éthyle, ou un mélange de ceux-ci.

Avantageusement, la phéromone (a) comprend au moins un acide gras ou un diacide aliphatique non cyclique, c'est-à-dire qu'elle comprend au moins un composant qui se trouve sous sa forme acide. En effet, cela permet d'éviter de susciter des odeurs désagréables pour l'homme puisque cet acide va pouvoir neutraliser la fonction azotée présente sur le composant (b) et donc contribuer à limiter la perception par l'homme de son odeur désagréable. Cela permet également d'augmenter la rémanence de l'effet répulsif contre les rongeurs de la composition selon l'invention.

Selon un mode de réalisation particulier, la phéromone (a) comprend, notamment est constituée par, un mélange d'azélate de diméthyle, de pimélate de diméthyle, d'acide caprique, d'acide laurique, de palmitate d'éthyle et d'oléate d'éthyle, de préférence dans des proportions d'environ 1:1:0,1:0,5:3:5 en poids. Un tel mélange simule une phéromone de marquage territorial de chat.

Selon un autre mode de réalisation particulier, la phéromone (a) comprend, notamment est constituée par, un mélange d'acide caprique, de laurate d'éthyle ou d'acide laurique, de myristate d'éthyle, de pentadécanoate d'éthyle, de palmitate d'éthyle, d'oléate d'éthyle, et de linoléate d'éthyle, de préférence dans des proportions d'environ 1:2:8:6:20:20:20 en poids.

Un tel mélange simule une phéromone de marquage territorial de chien ou de loup.

La phéromone (a) sera avantageusement présente dans la composition à une teneur de 1 % à 20 %, en particulier 2 % à 15 %, de préférence 6 % à 12 %, en poids, par rapport au poids total de la composition.

Le composant (b) vise à simuler une phéromone de marquage territorial de chasse (par ex. marquage urinaire) de félin (e.g. chat) ou de canidé (e.g. chien, renard, loup) ou une phéromone d'alarme de rongeur.

Les pyrazines substituées par 1, 2, 3 ou 4 groupes (C₁-C₆)alkyle (e.g. méthyle ou éthyle) sont avantageusement choisies parmi la 2,5-diméthylpyrazine, la 2,6-diméthylpyrazine, la 2,3,5-triméthylpyrazine, la 3-éthyl-2,5-diméthylpyrazine, la 2,3-diméthylpyrazine, la 2,3-diméthyl-5-éthylpyrazine, et leurs mélanges.

Par « (C₁-C₆)alkyle », on entend, au sens de la présente invention, une chaîne hydrocarbonée saturée, linéaire ou ramifiée, comportant 1 à 6, notamment 1 à 4, de préférence 1 à 2, atomes de carbone. Il s'agira en particulier d'un groupe méthyle ou éthyle.

Selon un mode de réalisation particulier, le composant (b) est choisi parmi la 2-phényléthylamine, les pyrazines substituées par 1, 2, 3 ou 4 groupes (C₁-C₆)alkyle, et leurs mélanges. Il simule une phéromone de marquage urinaire de félin (e.g. chat) ou de canidé (e.g. loup).

Selon un autre mode de réalisation particulier, le composant (b) est choisi parmi le 2-propylthiétane, la 2,5-dihydro-2,4,5-triméthylthiazoline, la 4,5-dihydro-2-sec-butyl-thiazoline, et leurs mélanges, de préférence parmi la 2,5-dihydro-2,4,5-triméthylthiazoline, la 4,5-dihydro-2-sec-butyl-thiazoline, et leurs mélanges. Il simule une phéromone de marquage de territoire de chasse de furet, ou de renard et/ou une phéromone d'alarme de souris.

Chacun de ces modes de réalisation pourra être associé par exemple à une phéromone (a) constituée par :
- un mélange d'azélate de diméthyle, de pimélate de diméthyle, d'acide caprique, d'acide laurique, de palmitate d'éthyle et d'oléate d'éthyle, de préférence dans des proportions d'environ 1:1:0,1:0,5:3:5, ou
- un mélange d'acide caprique, de laurate d'éthyle ou d'acide laurique, de myristate d'éthyle, de pentadécanoate d'éthyle, de palmitate d'éthyle, d'oléate d'éthyle, et de linoléate d'éthyle, de préférence dans des proportions d'environ 1:2:8:6:20:20:20 en poids.

Le composant (b) sera avantageusement présent dans la composition à une teneur de 0,001 ppm à 5000 ppm, de préférence 0,01 ppm à 2000 ppm.

Lorsque le composant (b) est choisi parmi la 2-phényléthylamine, les pyrazines substituées par 1, 2, 3 ou 4 groupes (C₁-C₆)alkyle, et leurs mélanges, le composant (b) est avantageusement présent dans la composition à une teneur de 100 ppm à 5000 ppm, en particulier de 500 ppm à 2000 ppm, par exemple à environ 1000 ppm, par rapport au poids total de la composition.

Lorsque le composant (b) est choisi parmi le 2-propylthiétane, la 2,5-dihydro-2,4,5-triméthylthiazoline, la 4,5-dihydro-2-*sec*-butyl-thiazoline, et leurs mélanges, de préférence parmi la 2,5-dihydro-2,4,5-triméthylthiazoline, la 4,5-dihydro-2-*sec*-butyl-thiazoline, et leurs mélanges, le composant (b) est avantageusement présent dans la composition à une teneur de 0,001 ppm à 50 ppm, en particulier de 0,005 ppm à 10 ppm, plus particulièrement de 0,05 ppm à 5 ppm, par exemple à environ 1 ppm, par rapport au poids total de la composition.

La composition selon l'invention pourra comprendre également un ou plusieurs solvants, avantageusement choisis parmi l'eau, le méthanol, l'éthanol, le n-propanol, l'isopropanol, le glycérol, le 1,2-propanediol, le 1,3-propanediol, et leurs mélanges ; notamment choisis parmi l'eau, l'éthanol, l'isopropanol, et leurs mélanges.

Le ou les solvants seront avantageusement présents dans la composition à une teneur de 70 % à 98 %, par exemple de 80% à 95 %, notamment de 85 % à 95 %, en particulier de 87 % à 93 %, en poids, par rapport au poids total de la composition.

Une telle composition comprenant un ou plusieurs solvants est avantageusement liquide, permettant d'en faciliter son application.

Selon un mode de réalisation particulier, la composition selon l'invention comprend :
(a) 1 % à 20 %, en particulier 2 % à 15 %, de préférence 6 % à 12 %, en poids, par rapport au poids total de la composition, de la phéromone (a) telle que définie ci-dessus ;
(b) 0,001 ppm à 5000 ppm, de préférence 0,01 ppm à 2000 ppm, par rapport au poids total de la composition, du composant (b) tel que défini ci-dessus ; et
(c) éventuellement un ou plusieurs solvants, avantageusement choisis parmi l'eau, le méthanol, l'éthanol, le n-propanol, l'isopropanol, le glycérol, le 1,2-propanediol, le 1,3-propanediol, et leurs mélanges, notamment choisis parmi l'eau, l'éthanol, l'isopropanol, et leurs mélanges, en particulier à une teneur en poids, par rapport au poids total de la composition, de 70 % à 98 %, par exemple de 80% à 95 %, notamment de 85 % à 95 %, en particulier de 87 % à 93 %.

Un premier type de composition selon l'invention (composition de type 1) comprend :
(a) une phéromone (a) constituée par un mélange d'azélate de diméthyle, de pimélate de diméthyle, d'acide caprique, d'acide laurique, de palmitate d'éthyle et d'oléate d'éthyle, de préférence dans des proportions d'environ 1:1:0,1:0,5:3:5 en poids ; et
(b) un composant (b) choisi pami la 2-phényléthylamine, les pyrazines substituées par 1, 2, 3 ou 4 groupes (C₁-C₆)alkyle (telles que la 2,5-diméthylpyrazine, la 2,6-diméthylpyrazine, la 2,3,5-triméthylpyrazine, la 3-éthyl-2,5-diméthylpyrazine, la 2,3-diméthylpyrazine, ou la 2,3-diméthyl-5-éthylpyrazine), et leurs mélanges.

Une telle composition avantageusement comprend, notamment est constituée par :
(a) 6,0 % à 12,0 %, notamment environ 10,0 %, en poids par rapport au poids total de la composition, d'un mélange d'azélate de diméthyle, de pimélate de diméthyle, d'acide caprique, d'acide laurique, de palmitate d'éthyle et d'oléate d'éthyle, de préférence dans des proportions d'environ 1:1:0,1:0,5:3:5 en poids ;
(b) 100 ppm à 5000 ppm, en particulier de 500 ppm à 2000 ppm, par exemple à environ 1000 ppm, par rapport au poids total de la composition, d'un composant (b) choisi pami la 2-phényléthylamine, les pyrazines substituées par 1, 2, 3 ou 4 groupes (C₁-C₆)alkyle (telles que la 2,5-diméthylpyrazine, la 2,6-diméthylpyrazine, la 2,3,5-triméthylpyrazine, la 3-éthyl-2,5-diméthylpyrazine, la 2,3-diméthylpyrazine, ou la 2,3-diméthyl-5-éthylpyrazine) et leurs mélanges ; et
(c) un ou plusieurs solvants tels que définis ci-dessus, notamment choisis parmi l'eau, l'éthanol, l'isopropanol, et leurs mélanges, en particulier à une teneur en poids, par rapport au poids total de la composition, de 85 % à 95 %, en particulier de 87 % à 93 %, notamment d'environ 90%.

Un deuxième type de composition selon l'invention (composition de type 2) comprend :
(a) une phéromone (a) constituée par un mélange d'azélate de diméthyle, de pimélate de diméthyle, d'acide caprique, d'acide laurique, de palmitate d'éthyle et d'oléate d'éthyle, de préférence dans des proportions d'environ 1:1:0,1:0,5:3:5 en poids ; et
(b) un composant (b) choisi pami le 2-propylthiétane, la 2,5-dihydro-2,4,5-triméthylthiazoline, et la 4,5-dihydro-2-sec-butyl-thiazoline, de préférence parmi la 2,5-dihydro-2,4,5-triméthylthiazoline, la 4,5-dihydro-2-sec-butyl-thiazoline, et leurs mélanges.

Une telle composition avantageusement comprend, notamment est constituée par :
(a) 6,0 % à 12,0 %, notamment environ 10,0 %, en poids par rapport au poids total de la composition, d'un mélange d'azélate de diméthyle, de pimélate de diméthyle, d'acide caprique, d'acide laurique, de palmitate d'éthyle et d'oléate d'éthyle, de préférence dans des proportions d'environ 1:1:0,1:0,5:3:5 en poids ;
(b) 0,001 ppm à 50 ppm, en particulier de 0,005 ppm à 10 ppm, plus particulièrement de 0,05 ppm à 5 ppm, par exemple à environ 1 ppm, par rapport au poids total de la composition, d'un composant (b) choisi pami le 2-propylthiétane, la 2,5-dihydro-2,4,5-triméthylthiazoline, et la 4,5-dihydro-2-*sec*-butyl-thiazoline, de préférence parmi la 2,5-dihydro-2,4,5-triméthylthiazoline, la 4,5-dihydro-2-*sec*-butyl-thiazoline, et leurs mélanges ; et
(c) un ou plusieurs solvants tels que définis ci-dessus, notamment choisis parmi l'eau, l'éthanol, l'isopropanol, et leurs mélanges, en particulier à une teneur en poids, par rapport au poids total de la composition, de 85 % à 95 %, en particulier de 87 % à 93 %, notamment d'environ 90%.

Un troisième type de composition selon l'invention (composition de type 3) comprend :
(a) une phéromone (a) constituée par un mélange d'acide caprique, de laurate d'éthyle ou d'acide laurique, de myristate d'éthyle, de pentadécanoate d'éthyle, de palmitate d'éthyle, d'oléate d'éthyle, et de linoléate d'éthyle, de préférence dans des proportions d'environ 1:2:8:6:20:20:20 en poids ; et
(b) un composant (b) choisi pami la 2-phényléthylamine, les pyrazines substituées par 1, 2, 3 ou 4 groupes (C₁-C₆)alkyle (telles que la 2,5-diméthylpyrazine, la 2,6-diméthylpyrazine, la 2,3,5-triméthylpyrazine, la 3-éthyl-2,5-diméthylpyrazine, la 2,3-diméthylpyrazine, ou la 2,3-diméthyl-5-éthylpyrazine) et leurs mélanges.

Une telle composition avantageusement comprend, notamment est constituée par :
(a) 6,0 % à 12,0 %, notamment environ 10,0 %, en poids par rapport au poids total de la composition, d'un mélange d'acide caprique, de laurate d'éthyle ou d'acide laurique, de myristate d'éthyle, de pentadécanoate d'éthyle, de palmitate d'éthyle, d'oléate d'éthyle, et de linoléate d'éthyle, de préférence dans des proportions d'environ 1:2:8:6:20:20:20 en poids ;
(b) 100 ppm à 5000 ppm, en particulier de 500 ppm à 2000 ppm, par exemple à environ 1000 ppm, par rapport au poids total de la composition, d'un composant (b) choisi pami la 2-phényléthylamine, les pyrazines substituées par 1, 2, 3 ou 4 groupes (C₁-C₆)alkyle (telles que la 2,5-diméthylpyrazine, la 2,6-diméthylpyrazine, la 2,3,5-triméthylpyrazine, la 3-éthyl-2,5-diméthylpyrazine, la 2,3-diméthylpyrazine, ou la 2,3-diméthyl-5-éthylpyrazine) et leurs mélanges ; et
(c) un ou plusieurs solvants tels que définis ci-dessus, notamment choisis parmi l'eau, l'éthanol, l'isopropanol, et leurs mélanges, en particulier à une teneur en poids, par rapport au poids total de la composition, de 85 % à 95 %, en particulier de 87 % à 93 %, notamment d'environ 90%.

Un quatrième type de composition selon l'invention (composition de type 4) comprend :
(a) une phéromone (a) constituée par un mélange d'acide caprique, de laurate d'éthyle ou d'acide laurique, de myristate d'éthyle, de pentadécanoate d'éthyle, de palmitate d'éthyle, d'oléate d'éthyle, et de linoléate d'éthyle, de préférence dans des proportions d'environ 1:2:8:6:20:20:20 en poids ; et
(b) un composant (b) choisi pami le 2-propylthiétane, la 2,5-dihydro-2,4,5-triméthylthiazoline, et la 4,5-dihydro-2-*sec*-butyl-thiazoline.

Une telle composition avantageusement comprend, notamment est constituée par :
(a) 6,0 % à 12,0 %, notamment environ 10,0 %, en poids par rapport au poids total de la composition, d'un mélange d'acide caprique, de laurate d'éthyle ou d'acide laurique, de myristate d'éthyle, de pentadécanoate d'éthyle, de palmitate d'éthyle, d'oléate d'éthyle, et de linoléate d'éthyle, de préférence dans des proportions d'environ 1:2:8:6:20:20:20 en poids ;
(b) 0,001 ppm à 50 ppm, en particulier de 0,005 ppm à 10 ppm, plus particulièrement de 0,05 ppm à 5 ppm, par exemple à environ 1 ppm, par rapport au poids total de la composition, d'un composant (b) choisi pami le 2-propylthiétane, la 2,5-dihydro-2,4,5-triméthylthiazoline, et la 4,5-dihydro-2-*sec*-butyl-thiazoline, de préférence parmi la 2,5-dihydro-2,4,5-triméthylthiazoline, la 4,5-dihydro-2-*sec*-butyl-thiazoline, et leurs mélanges ; et
(c) un ou plusieurs solvants tels que définis ci-dessus, notamment choisis parmi l'eau, l'éthanol, l'isopropanol, et leurs mélanges, en particulier à une teneur en poids, par rapport au poids total de la composition, de 85 % à 95 %, en particulier de 87 % à 93 %, notamment d'environ 90%.

### Article imprégné

La présente invention concerne également un article imprégné avec une composition selon l'invention, telle que définie ci-dessus.

L'article peut être tout article qui peut être placé dans l'espace ou sur l'objet à protéger contre les rongeurs. Il peut être en tout matériau, et en particulier peut comprendre un polymère thermoplastique tel que le PVC ou un matériau biodégradable, idéalement d'origine naturelle, tel que le bois ou le papier. Idéalement, le matériau permet l'absorption de la composition selon l'invention puis sont relargage dans le temps.

L'article pourra être en particulier un objet moulé, des granulés (par exemple en matériau thermoplastique), une étiquette autocollante (par exemple dont la surface externe sera en matériau thermoplastique tel que le PVC) ...

Un tel article imprégné peut être préparé par un procédé de préparation comprenant l'imprégnation de l'article en question avec une composition selon l'invention telle que définie ci-dessus, et plus particulièrement une composition selon l'invention comprenant un ou plusieurs solvants, à savoir une composition comprenant la phéromone (a), le composant (b) et un ou plusieurs solvants. Ainsi, la composition selon l'invention sera de préférence sous une forme liquide pour faciliter l'imprégnation. L'imprégnation pourra être effectuée par exemple par pulvérisation, par badigeonnage au pinceau ou au rouleau, ou encore par trempage, de préférence par pulvérisation.

Une fois l'article imprégné avec la composition selon l'invention, le ou les solvants s'évaporeront, si bien que l'article sera imprégné uniquement de la phéromone (a) et du composant (b).

### Application dans la lutte contre les rongeurs

La composition selon l'invention ou l'article imprégné selon l'invention est destiné à être utilisé pour lutter contre les rongeurs, et en particulier contre les rats et/ou les souris, éventuellement en association avec d'autres systèmes de lutte contre les rongeurs tels que des systèmes d'émissions d'ultra-sons.

En particulier, les compositions selon l'invention ou les articles imprégnés selon l'invention peuvent être utilisés dans une méthode de lutte contre les rongeurs comprenant :
(1) l'application d'une composition C₁ selon l'invention ou le dépôt d'un article imprégné avec une composition C₁ selon l'invention dans un espace ou sur un objet à protéger contre les rongeurs ; et
(2) optionnellement la réitération de l'étape (1) une ou plusieurs fois, dans un délai de 1 à 90 jours, de préférence de 7 à 35 jours, après l'étape précédente.

Selon un premier mode de réalisation selon l'invention, la méthode comprend :
(1) l'application d'une composition C₁ selon l'invention dans un espace ou sur un objet à protéger contre les rongeurs ; et
(2) optionnellement la réitération de l'étape (1) une ou plusieurs fois, dans un délai de 1 à 90 jours, de préférence de 7 à 35 jours, après l'étape précédente.

Selon un second mode de réalisation selon l'invention, la méthode comprend :
(1) le dépôt d'un article imprégné avec une composition C₁ selon l'invention dans un espace ou sur un objet à protéger contre les rongeurs ; et
(2) optionnellement la réitération de l'étape (1) une ou plusieurs fois, dans un délai de 1 à 90 jours, de préférence de 7 à 35 jours, après l'étape précédente.

Les objets à protéger peuvent être par exemple des fils électriques, des isolants thermiques, des denrées stockées (e.g. des sacs de grains, des sacs de farine, des caisses de fruits frais ou secs) ...

Les espaces à protéger peuvent être par exemple des espaces de vie ou de stockage, tels que des hangars, des granges, des silos à grain, des locaux électriques, des greniers, des pièces à vivre, des celliers ...

Avantageusement, l'étape (1) est réitérée plusieurs fois et donc l'étape (2) est mise en œuvre. Le délai entre deux applications d'une composition selon l'invention ou dépôts d'un article imprégné avec une composition selon l'invention n'est pas nécessairement toujours le même et pourra être choisi par exemple en fonction de la volatilité de la dernière composition selon l'invention utilisée, ce délai restera cependant de 1 à 90 jours, de préférence de 7 à 35 jours, après la dernière application d'une composition selon l'invention ou dépôt d'un article imprégné d'une composition selon l'invention.

Lorsqu'elle est mise en œuvre, l'étape (2) pourra par exemple comprendre N-1 réitération(s) réalisée(s) chacune indépendamment avec une composition Cᵢ selon l'invention ou un article imprégné avec une composition Cᵢ selon l'invention, le mélange phéromonal constitué de la phéromone (a) et du composant (b) de chacune des compositions C₁ à C_{N} étant différent d'une composition à l'autre, c'est-à-dire que les mélanges phéromonaux sont différents en nature pour chacune des compositions, ils sont constitués de composés différents. L'utilisation de compositions C₁ à C_{N} comprenant des mélanges phéromonaux différents permet de simuler successivement différents types de phéromones appartenant notamment à différents types de prédateurs des rongeurs, tels que des félins (e.g. chat), canidés (e.g. chien, renard ou loup), serpents, ou mustélidés et/ou représentant une phéromone d'alarme pour le rongeur. Cela permet ainsi d'éviter tout phénomène d'accoutumance des rongeurs et donc de maintenir l'efficacité de la méthode dans le temps.

Selon un mode de réalisation particulier, N est un nombre entier de 2 à 12, en particulier de 2 à 8, de préférence de 2 à 5, par exemple de 4,

Selon un mode de réalisation particulier de l'invention, au moins l'une des compositions C₁ à C_{N} comprend un composant (b) choisi pami le 2-propylthiétane, la 2,5-dihydro-2,4,5-triméthylthiazoline, et la 4,5-dihydro-2-*sec*-butyl-thiazoline, de préférence parmi la 2,5-dihydro-2,4,5-triméthylthiazoline, la 4,5-dihydro-2-*sec*-butyl-thiazoline, et leurs mélanges, telle qu'une composition de type 2 ou 4 telle que définie ci-dessus.

Selon un autre mode de réalisation particulier de l'invention, au moins l'une des compositions C₁ à C_{N} comprend un composant (b) choisi pami la 2-phényléthylamine, les pyrazines substituées par 1, 2, 3 ou 4 groupes (C₁-C₆)alkyle (telles que la 2,5-diméthylpyrazine, la 2,6-diméthylpyrazine, la 2,3,5-triméthylpyrazine, la 3-éthyl-2,5-diméthylpyrazine, la 2,3-diméthylpyrazine, ou la 2,3-diméthyl-5-éthylpyrazine) et leurs mélanges, et de préférence est une composition de type 1 ou 3 telle que définie ci-dessus.

Selon un autre mode de réalisation particulier de l'invention, au moins l'une des compositions C₁ à C_{N} comprend un composant (b) choisi pami la 2-phényléthylamine, les pyrazines substituées par 1, 2, 3 ou 4 groupes (C₁-C₆)alkyle (telles que la 2,5-diméthylpyrazine, la 2,6-diméthylpyrazine, la 2,3,5-triméthylpyrazine, la 3-éthyl-2,5-diméthylpyrazine, la 2,3-diméthylpyrazine, ou la 2,3-diméthyl-5-éthylpyrazine) et leurs mélanges, et de préférence est une composition de type 1 ou 3 telle que définie ci-dessus ; et
au moins une autre des compositions C₁ à C_{N} comprend un composant (b) choisi pami le 2-propylthiétane, la 2,5-dihydro-2,4,5-triméthylthiazoline, et la 4,5-dihydro-2-*sec*-butyl-thiazoline, de préférence parmi la 2,5-dihydro-2,4,5-triméthylthiazoline, la 4,5-dihydro-2-*sec-*butyl-thiazoline, et leurs mélanges, telle qu'une composition de type 2 ou 4 telle que définie ci-dessus.

Selon encore un autre mode de réalisation particulier de l'invention, N est égal à 4 et les compositions C₁ à C₄ sont différentes les unes des autres et sont respectivement une composition de type 1, une composition de type 2, une composition de type 3, et une composition de type 4 telles que définies ci-dessus.

Les étapes (1) et (2) de la méthode selon l'invention pourront également être répétées une ou plusieurs fois. Ainsi, des cycles utilisant des compositions selon l'invention différentes pourront être effectués plusieurs fois successivement.

Par exemple, lorsque N = 4, des compositions selon l'invention C₁ à C₄ différentes les unes des autres pourront être utilisées successivement et selon plusieurs cycles, par exemple comme suit : C₁, puis C₂, puis C₃, puis C₄, puis C₁, puis C₂, puis C₃, puis C₄, puis C₁, puis C₂, puis C₃, puis C₄ ...

### Kit

La présente invention concerne également un kit comprenant :
- au moins deux, notamment N (avec N tel que défini ci-dessus), compositions phéromonales selon l'invention telles que définies ci-dessus, le mélange phéromonal constitué de la phéromone (a) et du composant (b) de chacune des compositions du kit étant différent d'une composition à l'autre (c'est-à-dire qu'il est constitué de composés différents), ou
- plusieurs articles imprégnés tels que définis ci-dessus, au moins deux articles, notamment N (avec N tel que défini ci-dessus), étant imprégnés avec un mélange phéromonal, constitué de la phéromone (a) et du composant (b), différent d'un article à l'autre.

Selon un mode de réalisation particulier de l'invention, au moins l'un des mélanges phéromonaux comprend un composant (b) choisi pami le 2-propylthiétane, la 2,5-dihydro-2,4,5-triméthylthiazoline, et la 4,5-dihydro-2-*sec*-butyl-thiazoline, de préférence parmi la 2,5-dihydro-2,4,5-triméthylthiazoline, la 4,5-dihydro-2-*sec*-butyl-thiazoline, et leurs mélanges, telle qu'une composition de type 2 ou 4 telle que définie ci-dessus.

Selon un autre mode de réalisation particulier de l'invention, au moins l'un des mélanges phéromonaux comprend un composant (b) choisi pami la 2-phényléthylamine, les pyrazines substituées par 1, 2, 3 ou 4 groupes (C₁-C₆)alkyle (telles que la 2,5-diméthylpyrazine, la 2,6-diméthylpyrazine, la 2,3,5-triméthylpyrazine, la 3-éthyl-2,5-diméthylpyrazine, la 2,3-diméthylpyrazine, ou la 2,3-diméthyl-5-éthylpyrazine) et leurs mélanges, et de préférence est une composition de type 1 ou 3 telle que définie ci-dessus.

Selon un autre mode de réalisation particulier de l'invention, au moins l'un des mélanges phéromonaux comprend un composant (b) choisi pami la 2-phényléthylamine, les pyrazines substituées par 1, 2, 3 ou 4 groupes (C₁-C₆)alkyle (telles que la 2,5-diméthylpyrazine, la 2,6-diméthylpyrazine, la 2,3,5-triméthylpyrazine, la 3-éthyl-2,5-diméthylpyrazine, la 2,3-diméthylpyrazine, ou la 2,3-diméthyl-5-éthylpyrazine) et leurs mélanges, et de préférence est une composition de type 1 ou 3 telle que définie ci-dessus ; et
au moins un autre des mélanges phéromonaux comprend un composant (b) choisi pami le 2-propylthiétane, la 2,5-dihydro-2,4,5-triméthylthiazoline, et la 4,5-dihydro-2-*sec*-butyl-thiazoline, de préférence parmi la 2,5-dihydro-2,4,5-triméthylthiazoline, la 4,5-dihydro-2-*sec-*butyl-thiazoline, et leurs mélanges, telle qu'une composition de type 2 ou 4 telle que définie ci-dessus.

Selon encore un autre mode de réalisation particulier de l'invention, N est égal à 4 et les 4 compositions du kit sont respectivement une composition de type 1, une composition de type 2, une composition de type 3, et une composition de type 4 telles que définies ci-dessus ou les 4 articles imprégnés différents sont imprégnés respectivement avec une composition de type 1, une composition de type 2, une composition de type 3, et une composition de type 4 telles que définies ci-dessus.

Les compositions du kit seront de préférence contenues dans un contenant permettant de les pulvériser. Elles pourront également être contenues dans un contenant muni d'un système de goutte à goutte ou d'un pinceau. Elles seront donc de préférence sous forme liquide.

### EXEMPLES

Les matières premières utilisées pour ces exemples proviennent de chez Sigma Aldrich.

L'analyse des teneurs en phéromones est réalisée par chromatographie en phase gazeuse (CPG) avec un détecteur à ionisation de flamme sur un appareil Agilent - HP séries II 5890.

Les études de relargage des attractants sont réalisées dans des étuves ventilées sans hublot de manière à ne pas subir de rayonnement lumineux. Ces études sont réalisées selon deux méthodes, soit par suivi de perte de poids des échantillons, soit par suivi de la concentration résiduelle de la phéromone dans l'échantillon par CPG.

### Exemple 1 : Formulation 1

Dans un réacteur à double enveloppe de 2 L, on introduit à 50 °C sous agitation :
- 800,0 g d'isopropanol,
- 6,5 g d'azélate de diméthyle,
- 6,2 g de pimélate de diméthyle,
- 0,5 g d'acide caprique,
- 3,7 g d'acide laurique,
- 16,1 g de palmitate d'éthyle, et
- 67,0 g d'oléate d'éthyle.

Le mélange est laissé sous agitation pendant 15 minutes puis on ajoute 100 g d'une solution isopropanolique contenant 1 g de 2,5-diméthylpyrazine.

On laisse le mélange final sous agitation 15 minutes puis on laisse refroidir à température ambiante.

La solution ne présente aucune odeur désagréable. Elle reconstitue un mélange de phéromone faciale du chat (marquage d'espace de vie) et de marquage urinaire du chat (marquage de territoire de chasse).

### Exemple 2 : Formulation 2

Dans un réacteur à double enveloppe de 2 L, on introduit à 50 °C sous agitation :
- 800,0 g d'isopropanol,
- 6,5 g de d'azélate de diméthyle,
- 6,2 g de pimélate de diméthyle,
- 0,5 g d'acide caprique,
- 3,7 g d'acide laurique,
- 16,1 g de palmitate d'éthyle, et
- 67,0 g d'oléate d'éthyle.

Par ailleurs, on prépare 0,1 g de 2-(sec-butyl)-4,5-dihydro-thiazoline dans 1000 g d'isopropanol. On prélève alors 10 g de cette solution qu'on ajoute dans le réacteur.

90 g d'isopropanol sont ensuite ajoutés dans le réacteur. On laisse le mélange final sous agitation 15 minutes puis on laisse refroidir à température ambiante.

La solution ne présente aucune odeur désagréable. Ce mélange reconstitue la phéromone de marquage territorial du chat et y associe la phéromone d'alarme des souris et des rats.

### Exemple 3 : Formulation 3

Dans un réacteur à double enveloppe de 2 L, on introduit à 50 °C sous agitation :
- 800,0 g d'isopropanol,
- 0,6 g d'acide caprique,
- 1,2 g d'acide laurique,
- 4,2 g de myristate d'éthyle
- 3,6 g de pentadécanoate d'éthyle,
- 30,1 g de palmitate d'éthyle,
- 30,1 g d'oléate d'éthyle, et
- 30,1 g de linoléate d'éthyle.

Le mélange est laissé sous agitation pendant 15 minutes puis on ajoute 100,0 g d'une solution isopropanolique contenant 0,545 g de 2,6-diméthylpyrazine, 0,182 g de 2,3,5-triméthylpyrazine et 0,273 g de 3-éthyl-2,5-diméthylpyrazine.

Ce mélange simule la phéromone de marquage d'habitat des espèces canines (loup ou chien), et le marquage urinaire de ces animaux. Malgré l'odeur désagréable caractéristique des dérivés pyrazines utilisés, la formulation ne dégage aucune odeur désagréable.

### Exemple 4 : Formulation 4

Dans un réacteur à double enveloppe de 2 L, on introduit à 50 °C sous agitation :
- 800,0 g d'isopropanol,
- 0,6 g d'acide caprique,
- 1,2 g d'acide laurique,
- 4,2 g de myristate d'éthyle,
- 3,6 g de pentadécanoate d'éthyle,
- 30,1 g de palmitate d'éthyle,
- 30,1 g d'oléate d'éthyle, et
- 30,1 g de linoléate d'éthyle.

Le mélange est laissé sous agitation pendant 15 minutes.

Par ailleurs, on prépare 0,1 g de 4,5-dihydro-2,4,5-triméthylthiazoline dans 1000 g d'isopropanol. On prélève alors 10g de cette solution qu'on ajoute dans le réacteur.

90 g d'isopropanol sont ensuite ajoutés dans le réacteur. On laisse le mélange final sous agitation 15 minutes puis on laisse refroidir à température ambiante.

La solution ne présente aucune odeur désagréable. Ce mélange reconstitue la phéromone de marquage territorial associée à la phéromone d'habitat des canins et la phéromone de marquage de territoire de chasse des renards. La teneur en cette dernière (4,5-dihydro-2,4,5-triméthylthiazoline) est de 10ppm.

### Exemple 5 : Effet répulsif des formulations 1, 2, 3, 4 avec 1 semaine d'intervalle

On prépare des flacons de spray ambrés de 20 mL de chacune des formulations préparées selon les exemples 1 à 4. Les pompes délivrent 100 µL de formulation par une pression sur la pompe. Une grange dans une ferme contenant des bottes de pailles, des semences et des outils agricoles est utilisée pour mettre en place la simulation olfactive alternée (SOA) avec les formulations des exemples 1 à 4. Les dimensions de la grange sont de 20 m de large, 50 m de long et entre 3 et 7 m de haut.

On place 5 pièges à souris mécaniques munis d'appâts non toxiques de la marque « super cat » de la société Swiss Inno en les répartissant le long des murs ou au milieu de la grange.

On laisse pendant 4 semaines les 5 pièges qui sont relevés chaque semaine et rechargés s'ils ont attrapé une souris ou un rat. Cela permet d'obtenir une moyenne de référence de piégeage des pièges dans cette grange.

En début de semaine 5, on place des étiquettes autocollantes en PVC de dimensions 10 cm x 10 cm tous les 10 m sur les murs intérieurs. Un spray de la formulation 1 est appliqué sur chaque étiquette.

En début de semaine suivante (semaine 6), on relève les pièges et on applique 1 spray de la formulation de l'exemple 2 sur les étiquettes. On procède ainsi les deux semaines suivantes en utilisant d'abord la formulation 3, puis la formulation 4.

Les résultats de piégeage des souris sont présentés dans le Tableau 1 ci-dessous.

**[Tableau 1]**

| Semaine | 1 | 2 | 3 | 4 | 5 | 6 | 7 | 8 |
|---|---|---|---|---|---|---|---|---|
| Nombre de souris piégées | 2 | 3 | 1 | 2 | 1 | 0 | 0 | 0 |

Lors des quatre premières semaines témoin, 2 souris sont capturées en moyenne par semaine pour 5 pièges, soit 0,4 souris/piège/semaine. Lors des quatre semaines suivantes, en présence des quatre formulations selon les exemples 1 à 4, il y a en moyenne 0,25 souris capturée par semaine pour 5 pièges. Le traitement par SOA a donc bien protégé la grange contre l'installation ou la circulation de souris.

### Exemple 6 : Espacement des traitements effectués dans l'exemple 5

L'expérience de l'exemple 5 est poursuivie en appliquant au début de la semaine 9 la formulation de l'exemple 1, puis en début de semaine 11 la formulation de l'exemple 2, puis en début de semaine 13 la formulation de l'exemple 3 et en début de semaine 15 celle de l'exemple 4. On continue le suivi des pièges toutes les semaines jusqu'à la semaine 16.

Les résultats obtenus sont présentés dans le Tableau 2 suivant.

**[Tableau 2]**

| Semaine | 9 | 10 | 11 | 12 | 13 | 14 | 15 | 16 |
|---|---|---|---|---|---|---|---|---|
| Nombre de souris piégées | 0 | 1 | 0 | 0 | 0 | 1 | 0 | 0 |

Il y a donc eu 2 souris piégées sur toute la période de test ce qui revient à 0,05 souris piégée par semaine par piège, soit 87,5 % de moins que pendant la période témoin. Cet exemple démontre que la SOA peut fonctionner avec un espacement entre les traitements de 15 jours.

### Exemple 7 : Estimation de la durée entre 2 applications de la SOA

Sur 10 étiquettes telles qu'utilisées dans l'exemple 5, on applique 4 sprays de la formulation 1. On place ces étiquettes dans une étuve ventilée à 30°C. On prélève 2 étiquettes chaque semaine. Chaque étiquette est rincée 3 fois avec 10 mL de méthyl-*ter*-butyl-éther. Les solutions de rinçage sont rassemblées et on dose par CPG la quantité des composants de la phéromone de chat restants sur l'étiquette.

Les quantités résiduelles de ces composants par rapport à leur dose initiale sont présentées dans le Tableau 3 ci-dessous.

**[Tableau 3]**

| Composant | Semaine 1 | Semaine 2 | Semaine 3 | Semaine 4 | Semaine 5 |
|---|---|---|---|---|---|
| Azélate de diméthyle | 84 % | 69 % | 51 % | 34 % | 20 % |
| Pimélate de diméthyle | 90 % | 84 % | 78 % | 69 % | 61 % |
| Acide caprique | 86 % | 75 % | 67 % | 53 % | 44 % |
| Acide laurique | 90 % | 81 % | 73 % | 63 % | 54 % |
| Palmitate d'éthyle | 81 % | 70 % | 56 % | 39 % | 26 % |
| Oléate d'éthyle | 100 % | 100 % | 100 % | 100 % | 100 % |
| 2,5-diméthylpyrazine | 86 % | 72 % | 58 % | 50 % | < 30 %* |

| | | | | | |
|---|---|---|---|---|---|
| * la limite de quantification est atteinte en dessous de 0,03 % | | | | | |

Cet exemple démontre qu'au bout de 5 semaines à 30 °C, il reste au moins 20 % de l'ensemble des composants de la formulation initiale.

## Revendications

1. Composition phéromonale comprenant :
(a) 6,0 % à 12,0 %, notamment environ 10,0 %, en poids, par rapport au poids total de la composition, d'un mélange d'azélate de diméthyle, de pimélate de diméthyle, d'acide caprique, d'acide laurique, de palmitate d'éthyle et d'oléate d'éthyle ; ou
6,0 % à 12,0 %, notamment environ 10,0 %, en poids, par rapport au poids total de la composition, d'un mélange d'acide caprique, de laurate d'éthyle ou d'acide laurique, de myristate d'éthyle, de pentadécanoate d'éthyle, de palmitate d'éthyle, d'oléate d'éthyle, et de linoléate d'éthyle ;
(b) 100 ppm à 5000 ppm, en particulier 500 ppm à 2000 ppm, par exemple environ 1000 ppm, par rapport au poids total de la composition, d'un composant (b) choisi pami la 2-phényléthylamine, les pyrazines substituées par 1, 2, 3 ou 4 groupes (C₁-C₆)alkyle, et leurs mélanges ; ou
0,001 ppm à 50 ppm, en particulier 0,005 ppm à 10 ppm, plus particulièrement 0,05 ppm à 5 ppm, par exemple environ 1 ppm, par rapport au poids total de la composition, d'un composant (b) choisi pami le 2-propylthiétane, la 2,5-dihydro-2,4,5-triméthylthiazoline, et la 4,5-dihydro-2-sec-butyl-thiazoline ; et
(c) éventuellement un ou plusieurs solvants.

2. Composition selon la revendication 1, comprenant 85 % à 95 %, en particulier de 87 % à 93 % en poids, par rapport au poids total de la composition, de composant (c).

3. Composition selon la revendication 1 ou 2, dans laquelle le composant (c) est choisi parmi l'eau, le méthanol, l'éthanol, le n-propanol, l'isopropanol, le glycérol, le 1,2-propanediol, le 1,3-propanediol, et leurs mélanges, notamment choisi parmi l'eau, l'éthanol, l'isopropanol, et leurs mélanges.

4. Composition selon l'une quelconque des revendications 1 à 3, dans laquelle les pyrazines substituées par 1, 2, 3 ou 4 groupes (C₁-C₆)alkyle sont choisies parmi la 2,5-diméthylpyrazine, la 2,6-diméthylpyrazine, la 2,3,5-triméthylpyrazine, la 3-éthyl-2,5-diméthylpyrazine, la 2,3-diméthylpyrazine, la 2,3-diméthyl-5-éthylpyrazine, et leurs mélanges.

5. Composition selon l'une quelconque des revendications 1 à 4, dans laquelle le composant (a) est un mélange d'azélate de diméthyle, de pimélate de diméthyle, d'acide caprique, d'acide laurique, de palmitate d'éthyle et d'oléate d'éthyle dans les proportions 1 :1 :0,1 :0,5 :3 :5 en poids ; ou
un mélange d'acide caprique, de laurate d'éthyle ou d'acide laurique, de myristate d'éthyle, de pentadécanoate d'éthyle, de palmitate d'éthyle, d'oléate d'éthyle, et de linoléate d'éthyle dans les proportions 1 :2 :8 :6 :20 :20 :20 en poids.

6. Composition selon l'une quelconque des revendications 1 à 5, comprenant :
(a) 6,0 % à 12,0 %, notamment environ 10,0 %, en poids, par rapport au poids total de la composition, d'un mélange d'azélate de diméthyle, de pimélate de diméthyle, d'acide caprique, d'acide laurique, de palmitate d'éthyle et d'oléate d'éthyle, de préférence dans les proportions 1 :1 :0,1 :0,5 :3 :5 en poids ;
(b) 100 ppm à 5000 ppm, en particulier 500 ppm à 2000 ppm, par exemple environ 1000 ppm, par rapport au poids total de la composition, d'un composant (b) choisi pami la 2-phényléthylamine, les pyrazines substituées par 1, 2, 3 ou 4 groupes (C₁-C₆)alkyle, et leurs mélanges, notamment choisi parmi la 2-phényléthylamine, la 2,5-diméthylpyrazine, la 2,6-diméthylpyrazine, la 2,3,5-triméthylpyrazine, la 3-éthyl-2,5-diméthylpyrazine, la 2,3-diméthylpyrazine, la 2,3-diméthyl-5-éthylpyrazine, et leurs mélanges ; et
(c) un ou plusieurs solvants, notamment choisis parmi l'eau, l'éthanol, l'isopropanol, et leurs mélanges.

7. Composition selon l'une quelconque des revendications 1 à 5, comprenant :
(a) 6,0 % à 12,0 %, notamment environ 10,0 %, en poids, par rapport au poids total de la composition, d'un mélange d'azélate de diméthyle, de pimélate de diméthyle, d'acide caprique, d'acide laurique, de palmitate d'éthyle et d'oléate d'éthyle, de préférence dans les proportions 1 :1 :0,1 :0,5 :3 :5 en poids ;
(b) 0,001 ppm à 50 ppm, en particulier 0,005 ppm à 10 ppm, plus particulièrement 0,05 ppm à 5 ppm, par exemple environ 1 ppm, par rapport au poids total de la composition, d'un composant (b) choisi pami le 2-propylthiétane, la 2,5-dihydro-2,4,5-triméthylthiazoline, et la 4,5-dihydro-2-sec-butyl-thiazoline ; et
(c) un ou plusieurs solvants, notamment choisis parmi l'eau, l'éthanol, l'isopropanol, et leurs mélanges.

8. Composition selon l'une quelconque des revendications 1 à 5, comprenant :
(a) 6,0 % à 12,0 %, notamment environ 10,0 %, en poids, par rapport au poids total de la composition, d'un mélange d'acide caprique, de laurate d'éthyle ou d'acide laurique, de myristate d'éthyle, de pentadécanoate d'éthyle, de palmitate d'éthyle, d'oléate d'éthyle, et de linoléate d'éthyle, de préférence dans les proportions 1 :2 :8 :6 :20 :20 :20 en poids ;
(b) 100 ppm à 5000 ppm, en particulier 500 ppm à 2000 ppm, par exemple environ 1000 ppm, par rapport au poids total de la composition, d'un composant (b) choisi parmi la 2-phényléthylamine, les pyrazines substituées par 1, 2, 3 ou 4 groupes (C₁-C₆)alkyle, et leurs mélanges, notamment choisi parmi la 2-phényléthylamine, la 2,5-diméthylpyrazine, la 2,6-diméthylpyrazine, la 2,3,5-triméthylpyrazine, la 3-éthyl-2,5-diméthylpyrazine, la 2,3-diméthylpyrazine, la 2,3-diméthyl-5-éthylpyrazine, et leurs mélanges ; et
(c) un ou plusieurs solvants, notamment choisis parmi l'eau, l'éthanol, l'isopropanol, et leurs mélanges.

9. Composition selon l'une quelconque des revendications 1 à 5, comprenant :
(a) 6,0 % à 12,0 %, notamment environ 10,0 %, en poids, par rapport au poids total de la composition, d'un mélange d'acide caprique, de laurate d'éthyle ou d'acide laurique, de myristate d'éthyle, de pentadécanoate d'éthyle, de palmitate d'éthyle, d'oléate d'éthyle, et de linoléate d'éthyle, de préférence dans les proportions 1 :2 :8 :6 :20 :20 :20 en poids ;
(b) 0,001 ppm à 50 ppm, en particulier 0,005 ppm à 10 ppm, plus particulièrement 0,05 ppm à 5 ppm, par exemple environ 1 ppm, par rapport au poids total de la composition, d'un composant (b) choisi pami le 2-propylthiétane, la 2,5-dihydro-2,4,5-triméthylthiazoline, et la 4,5-dihydro-2-sec-butyl-thiazoline.
(c) un ou plusieurs solvants, notamment choisis parmi l'eau, l'éthanol, l'isopropanol, et leurs mélanges.

10. Article imprégné par une composition selon l'une quelconque des revendications 1 à 9.

11. Procédé de préparation d'un article imprégné selon la revendication 10 comprenant l'imprégnation de l'article avec une composition selon l'une quelconque des revendications 1 à 9, de préférence comprenant un ou plusieurs solvants.

12. Utilisation d'une composition selon l'une quelconque des revendications 1 à 9 ou d'un article imprégné selon la revendication 10, pour lutter contre les rongeurs.

13. Méthode de lutte contre les rongeurs comprenant :
(1) l'application d'une composition C₁ selon l'une quelconque des revendications 1 à 9 ou le dépôt d'un article imprégné avec une composition C₁ selon l'une quelconque des revendications 1 à 9 dans un espace ou sur un objet à protéger contre les rongeurs ; et
(2) optionnellement la réitération de l'étape (1) une ou plusieurs fois, dans un délai de 1 à 90 jours, de préférence de 7 à 35 jours, après l'étape précédente.

14. Méthode selon la revendication 13, dans laquelle l'étape (2) est mise en œuvre et comprend N-1 réitération(s) réalisée(s) chacune indépendamment avec une composition Cᵢ selon l'une quelconque des revendications 1 à 9 ou un article imprégné avec une composition Cᵢ selon l'une quelconque des revendications 1 à 9, de préférence avec N étant un nombre entier de 2 à 12, en particulier de 2 à 8, de préférence de 2 à 5, par exemple de 4,
le mélange phéromonal constitué de la phéromone (a) et du composant (b) de chacune des compositions C₁ à C_{N} étant différents d'une composition à l'autre.

15. Méthode selon la revendication 14, dans laquelle au moins l'une des compositions C₁ à C_{N} comprend un composant (b) choisi pami la 2-phényléthylamine, les pyrazines substituées par 1, 2, 3 ou 4 groupes (C₁-C₆)alkyle, et leurs mélanges, notamment choisis parmi la 2-phényléthylamine, la 2,5-diméthylpyrazine, la 2,6-diméthylpyrazine, la 2,3,5-triméthylpyrazine, la 3-éthyl-2,5-diméthylpyrazine, la 2,3-diméthylpyrazine, la 2,3-diméthyl-5-éthylpyrazine, et leurs mélanges, et de préférence est une composition selon la revendication 6 ou 8 ; et
dans laquelle au moins une autre des compositions C₁ à C_{N} comprend un composant (b) choisi pami le 2-propylthiétane, la 2,5-dihydro-2,4,5-triméthylthiazoline, et la 4,5-dihydro-2-sec-butyl-thiazoline, et de préférence est une composition selon la revendication 7 ou 9.

16. Méthode selon la revendication 14 ou 15, dans laquelle N est égal à 4, les compositions C₁ à C₄ sont différentes les unes des autres et sont respectivement une composition selon la revendication 6, une composition selon la revendication 7, une composition selon la revendication 8, et une composition selon la revendication 9.

17. Méthode selon l'une quelconque des revendications 13 à 15, dans laquelle les étapes (1) et (2) sont répétées une ou plusieurs fois.

18. Kit comprenant :
- au moins deux compositions selon l'une quelconque des revendications 1 à 9, le mélange phéromonal constitué de la phéromone (a) et du composant (b) de chacune des compositions étant différent d'une composition à l'autre, ou
- plusieurs articles imprégnés selon la revendication 10, au moins deux articles étant imprégnés avec un mélange phéromonal, constitué de la phéromone (a) et du composant (b), différent d'un article à l'autre.

## Patentansprüche

1. Pheromonzusammensetzung, umfassend:
(a) 6,0 bis 12,0 Gew.-%, insbesondere etwa 10,0 Gew.-%, bezogen auf das Gesamtgewicht der Zusammensetzung, eines Gemischs aus Dimethylazelat, Dimethylpimelat, Caprinsäure, Laurinsäure, Ethylpalmitat und Ethyloleat; oder
6,0 bis 12,0 Gew.-%, insbesondere etwa 10,0 Gew.-%, bezogen auf das Gesamtgewicht der Zusammensetzung, eines Gemischs aus Caprinsäure, Ethyllaurat oder Laurinsäure, Ethylmyristat, Ethylpentadecanat, Ethylpalmitat, Ethyloleat und Ethyllinoleat;
(b) 100 ppm bis 5000 ppm, insbesondere 500 ppm bis 2000 ppm, beispielsweise etwa 1000 ppm, bezogen auf das Gesamtgewicht der Zusammensetzung, einer Verbindung (b), ausgewählt aus 2-Phenylethylamin, den mit 1, 2, 3 oder 4 (C₁-C₆)-Alkylgruppen substituierten Pyrazinen und deren Gemischen; oder
0,001 ppm bis 50 ppm, insbesondere 0,005 ppm bis 10 ppm, vor allem 0,05 ppm bis 5 ppm, beispielsweise etwa 1 ppm, bezogen auf das Gesamtgewicht der Zusammensetzung, einer Verbindung (b), ausgewählt aus 2-Propylthietan, 2,5-Dihydro-2,4,5-trimethylthiazolin und 4,5-Dihydro-2-sec-butylthiazolin; und
(c) gegebenenfalls ein oder mehrere Lösungsmittel.

2. Zusammensetzung nach Anspruch 1, umfassend 85 bis 95 Gew.-%, insbesondere 87 bis 93 Gew.-%, bezogen auf das Gesamtgewicht der Zusammensetzung, der Verbindung (c).

3. Zusammensetzung nach Anspruch 1 oder 2, wobei die Verbindung (c) aus Wasser, Methanol, Ethanol, n-Propanol, Isopropanol, Glycerin, 1,2-Propandiol, 1,3-Propandiol und deren Gemischen ausgewählt ist, insbesondere aus Wasser, Ethanol, Isopropanol und deren Gemischen ausgewählt ist.

4. Zusammensetzung nach einem der Ansprüche 1 bis 3, wobei die mit 1, 2, 3 oder 4 (C₁-C₆)-Alkylgruppen substituierten Pyrazine aus 2,5-Dimethylpyrazin, 2,6-Dimethylpyrazin, 2,3,5-Trimethylpyrazin, 3-Ethyl-2,5-dimethylpyrazin, 2,3-Dimethylpyrazin, 2,3-Dimethyl-5-ethylpyrazin und deren Gemischen ausgewählt sind.

5. Zusammensetzung nach einem der Ansprüche 1 bis 4, wobei die Verbindung (a) ein Gemisch aus Dimethylazelat, Dimethylpimelat, Caprinsäure, Laurinsäure, Ethylpalmitat und Ethyloleat in den Gewichtsverhältnissen 1:1:0,1:0,5:3:5 ist; oder
ein Gemisch aus Caprinsäure, Ethyllaurat oder Laurinsäure, Ethylmyristat, Ethylpentadecanoat, Ethylpalmitat, Ethyloleat und Ethyllinoleat in den Gewichtsverhältnissen 1:2:8:6:20:20:20 ist.

6. Zusammensetzung nach einem der Ansprüche 1 bis 5, umfassend:
(a) 6,0 bis 12,0 Gew.-%, insbesondere etwa 10,0 Gew.-%, bezogen auf das Gesamtgewicht der Zusammensetzung, eines Gemischs aus Dimethylazelat, Dimethylpimelat, Caprinsäure, Laurinsäure, Ethylpalmitat und Ethyloleat, vorzugsweise in den Gewichtsverhältnissen 1:1:0,1:0,5:3:5;
(b) 100 ppm bis 5000 ppm, insbesondere 500 ppm bis 2000 ppm, beispielsweise etwa 1000 ppm, bezogen auf das Gesamtgewicht der Zusammensetzung, einer Verbindung (b), ausgewählt aus 2-Phenylethylamin, den mit 1, 2, 3 oder 4 (C₁-C₆)-Alkylgruppen substituierten Pyrazinen und deren Gemischen, insbesondere ausgewählt aus 2-Phenylethylamin, 2,5-Dimethylpyrazin, 2,6-Dimethylpyrazin, 2,3,5-Trimethylpyrazin, 3-Ethyl-2,5-dimethylpyrazin, 2,3-Dimethylpyrazin, 2,3-Dimethyl-5-ethylpyrazin und deren Gemischen; und
(c) ein oder mehrere Lösungsmittel, die insbesondere aus Wasser, Ethanol, Isopropanol und deren Gemischen ausgewählt sind.

7. Zusammensetzung nach einem der Ansprüche 1 bis 5, umfassend:
(a) 6,0 bis 12,0 Gew.-%, insbesondere etwa 10,0 Gew.-%, bezogen auf das Gesamtgewicht der Zusammensetzung, eines Gemischs aus Dimethylazelat, Dimethylpimelat, Caprinsäure, Laurinsäure, Ethylpalmitat und Ethyloleat, vorzugsweise in den Gewichtsverhältnissen 1:1:0,1:0,5:3:5;
(b) 0,001 ppm bis 50 ppm, insbesondere 0,005 ppm bis 10 ppm, vor allem 0,05 ppm bis 5 ppm, beispielsweise etwa 1 ppm, bezogen auf das Gesamtgewicht der Zusammensetzung, einer Verbindung (b), ausgewählt aus 2-Propylthietan, 2,5-Dihydro-2,4,5-trimethylthiazolin und 4,5-Dihydro-2-sec-butylthiazolin; und
(c) ein oder mehrere Lösungsmittel, die insbesondere aus Wasser, Ethanol, Isopropanol und deren Gemischen ausgewählt sind.

8. Zusammensetzung nach einem der Ansprüche 1 bis 5, umfassend:
(a) 6,0 bis 12,0 Gew.-%, insbesondere etwa 10,0 Gew.-%, bezogen auf das Gesamtgewicht der Zusammensetzung, eines Gemischs aus Caprinsäure, Ethyllaurat oder Laurinsäure, Ethylmyristat, Ethylpentadecanat, Ethylpalmitat, Ethyloleat und Ethyllinoleat, vorzugsweise in den Gewichtsverhältnissen 1:2:8:6:20:20:20;
(b) 100 ppm bis 5000 ppm, insbesondere 500 ppm bis 2000 ppm, beispielsweise etwa 1000 ppm, bezogen auf das Gesamtgewicht der Zusammensetzung, einer Verbindung (b), ausgewählt aus 2-Phenylethylamin, den mit 1, 2, 3 oder 4 (C₁-C₆)-Alkylgruppen substituierten Pyrazinen, und deren Gemischen, insbesondere ausgewählt aus 2-Phenylethylamin, 2,5-Dimethylpyrazin, 2,6-Dimethylpyrazin, 2,3,5-Trimethylpyrazin, 3-Ethyl-2,5-dimethylpyrazin, 2,3-Dimethylpyrazin, 2,3-Dimethyl-5-ethylpyrazin und deren Gemischen; und
(c) ein oder mehrere Lösungsmittel, die insbesondere aus Wasser, Ethanol, Isopropanol und deren Gemischen ausgewählt sind.

9. Zusammensetzung nach einem der Ansprüche 1 bis 5, umfassend:
(a) 6,0 bis 12,0 Gew.-%, insbesondere etwa 10,0 Gew.-%, bezogen auf das Gesamtgewicht der Zusammensetzung, eines Gemischs aus Caprinsäure, Ethyllaurat oder Laurinsäure, Ethylmyristat, Ethylpentadecanoat, Ethylpalmitat, Ethyloleat und Ethyllinoleat, vorzugsweise in den Gewichtsverhältnissen 1:2:8:6:20:20:20;
(b) 0,001 ppm bis 50 ppm, insbesondere 0,005 ppm bis 10 ppm, vor allem 0,05 ppm bis 5 ppm, beispielsweise etwa 1 ppm, bezogen auf das Gesamtgewicht der Zusammensetzung, einer Verbindung (b), ausgewählt aus 2-Propylthietan, 2,5-Dihydro-2,4,5-trimethylthiazolin und 4,5-Dihydro-2-sec-butylthiazolin;
(c) ein oder mehrere Lösungsmittel, die insbesondere aus Wasser, Ethanol, Isopropanol und deren Gemischen ausgewählt sind.

10. Artikel, der mit einer Zusammensetzung nach einem der Ansprüche 1 bis 9 imprägniert ist.

11. Verfahren zur Herstellung eines imprägnierten Artikels nach Anspruch 10, umfassend das Imprägnieren des Artikels mit einer Zusammensetzung nach einem der Ansprüche 1 bis 9, vorzugsweise umfassend ein oder mehrere Lösungsmittel.

12. Verwendung einer Zusammensetzung nach einem der Ansprüche 1 bis 9 oder eines imprägnierten Artikels nach Anspruch 10 zur Bekämpfung von Nagern.

13. Methode zur Bekämpfung von Nagern, umfassend:
(1) das Aufbringen einer Zusammensetzung C₁ nach einem der Ansprüche 1 bis 9 oder das Ablegen eines mit einer Zusammensetzung C₁ nach einem der Ansprüche 1 bis 9 imprägnierten Artikels in einem Bereich oder auf einem Gegenstand, der vor Nagern geschützt werden soll; und
(2) optional das Wiederholen von Schritt (1) ein-oder mehrmals innerhalb von 1 bis 90 Tagen, vorzugsweise 7 bis 35 Tagen, nach dem vorherigen Schritt.

14. Methode nach Anspruch 13, wobei Schritt (2) durchgeführt wird und N-1 Wiederholung(en) umfasst, die jeweils unabhängig voneinander mit einer Zusammensetzung C₁ nach einem der Ansprüche 1 bis 9 oder einem mit einer Zusammensetzung C₁ nach einem der Ansprüche 1 bis 9 imprägnierten Artikel durchgeführt wird/werden, vorzugsweise mit N als einer ganzen Zahl von 2 bis 12, insbesondere von 2 bis 8, vorzugsweise von 2 bis 5, beispielsweise von 4,
wobei das aus dem Pheromon (a) und der Verbindung (b) jeder der Zusammensetzungen C₁ bis C_{N} bestehende Pheromongemisch von einer Zusammensetzung zur anderen unterschiedlich ist.

15. Methode nach Anspruch 14, wobei mindestens eine der Zusammensetzungen C₁ bis C_{N} eine Verbindung (b) umfasst, die aus 2-Phenylethylamin, den mit 1, 2, 3 oder 4 (C₁-C₆)-Alkylgruppen substituierten Pyrazinen und deren Gemischen ausgewählt ist, die insbesondere aus 2-Phenylethylamin, 2,5-Dimethylpyrazin, 2,6-Dimethylpyrazin, 2,3,5-Trimethylpyrazin, 3-Ethyl-2,5-dimethylpyrazin, 2,3-Dimethylpyrazin, 2,3-Dimethyl-5-ethylpyrazin und deren Gemischen ausgewählt sind, und vorzugsweise eine Zusammensetzung nach Anspruch 6 oder 8 ist; und
wobei mindestens eine weitere der Zusammensetzungen C₁ bis C_{N} eine Verbindung (b) umfasst, die aus 2-Propylthietan, 2,5-Dihydro-2,4,5-trimethylthiazolin und 4,5-Dihydro-2-sec-butylthiazolin ausgewählt ist, und vorzugsweise eine Zusammensetzung nach Anspruch 7 oder 9 ist.

16. Methode nach Anspruch 14 oder 15, wobei N gleich 4 ist, die Zusammensetzungen C₁ bis C₄ voneinander verschieden sind und jeweils eine Zusammensetzung nach Anspruch 6, eine Zusammensetzung nach Anspruch 7, eine Zusammensetzung nach Anspruch 8 und eine Zusammensetzung nach Anspruch 9 sind.

17. Methode nach einem der Ansprüche 13 bis 15, wobei die Schritte (1) und (2) ein- oder mehrmals wiederholt werden.

18. Set, umfassend:
- mindestens zwei Zusammensetzungen nach einem der Ansprüche 1 bis 9, wobei das Pheromongemisch, bestehend aus dem Pheromon (a) und der Verbindung (b) jeder der Zusammensetzungen, sich von einer Zusammensetzung zur anderen unterscheidet, oder
- mehrere imprägnierte Artikel nach Anspruch 10, wobei mindestens zwei Artikel mit einem Pheromongemisch imprägniert sind, das aus dem Pheromon (a) und der Verbindung (b) besteht und sich von Artikel zu Artikel unterscheidet.

## Claims

1. A pheromonal composition comprising:
(a) 6.0% to 12.0%, particularly about 10.0%, by weight, relative to the total weight of the composition, of a mixture of dimethyl azelate, dimethyl pimelate, capric acid, lauric acid, ethyl palmitate, and ethyl oleate; or
6.0% to 12.0%, particularly about 10.0%, by weight, relative to the total weight of the composition, of a mixture of capric acid, ethyl laurate or lauric acid, ethyl myristate, ethyl pentadecanoate, ethyl palmitate, ethyl oleate, and ethyl linoleate;
(b) 100 ppm to 5000 ppm, in particular 500 ppm to 2000 ppm, for example approximately 1000 ppm, relative to the total weight of the composition, of a component (b) selected from 2-phenylethylamine, pyrazines substituted with 1, 2, 3 or 4 (C₁-C₆)alkyl groups, and mixtures thereof; or
0.001 ppm to 50 ppm, in particular 0.005 ppm to 10 ppm, more particularly 0.05 ppm to 5 ppm, for example approximately 1 ppm, relative to the total weight of the composition, of a component (b) selected from 2-propylthietane, 2,5-dihydro-2,4,5-trimethylthiazoline, and 4,5-dihydro-2-*sec*-butyl-thiazoline; and
(c) optionally one or more solvents.

2. The composition according to claim 1, comprising 85% to 95%, in particular 87% to 93% by weight, relative to the total weight of the composition, of component (c).

3. The composition according to claim 1 or 2, wherein component (c) is selected from water, methanol, ethanol, n-propanol, isopropanol, glycerol, 1,2-propanediol, 1,3-propanediol, and mixtures thereof, in particular selected from water, ethanol, isopropanol, and mixtures thereof.

4. The composition according to any of claims 1 to 3, wherein the pyrazines substituted with 1, 2, 3, or 4 (C₁-C₆)alkyl groups are selected from 2,5-dimethylpyrazine, 2,6-dimethylpyrazine, 2,3,5-trimethylpyrazine, 3-ethyl-2,5-dimethylpyrazine, 2,3-dimethylpyrazine, 2,3-dimethyl-5-ethylpyrazine, and mixtures thereof.

5. The composition according to any of claims 1 to 4, wherein component (a) is a mixture of dimethyl azelate, dimethyl pimelate, capric acid, lauric acid, ethyl palmitate, and ethyl oleate in the proportions 1:1:0.1:0.5:3:5 by weight; or
a mixture of capric acid, ethyl laurate or lauric acid, ethyl myristate, ethyl pentadecanoate, ethyl palmitate, ethyl oleate, and ethyl linoleate in the proportions 1:2:8:6:20:20:20 by weight.

6. The composition according to any of claims 1 to 5, comprising:
(a) 6.0% to 12.0%, particularly about 10.0%, by weight, relative to the total weight of the composition, of a mixture of dimethyl azelate, dimethyl pimelate, capric acid, lauric acid, ethyl palmitate, and ethyl oleate, preferably in proportions of 1:1:0.1:0.5:3:5 by weight;
(b) 100 ppm to 5000 ppm, in particular 500 ppm to 2000 ppm, for example approximately 1000 ppm, relative to the total weight of the composition, of a component (b) selected from 2-phenylethylamine, pyrazines substituted with 1, 2, 3 or 4 (C₁-C₆)alkyl groups, and mixtures thereof, in particular selected from 2-phenylethylamine, 2,5-dimethylpyrazine, 2,6-dimethylpyrazine, 2,3,5-trimethylpyrazine, 3-ethyl-2,5-dimethylpyrazine, 2,3-dimethylpyrazine, 2,3-dimethyl-5-ethylpyrazine, and mixtures thereof; and
(c) one or more solvents, in particular selected from water, ethanol, isopropanol, and mixtures thereof.

7. The composition according to any of claims 1 to 5, comprising:
(a) 6.0% to 12.0%, in particular approximately 10.0%, by weight, relative to the total weight of the composition, of a mixture of dimethyl azelate, dimethyl pimelate, capric acid, lauric acid, ethyl palmitate, and ethyl oleate, preferably in proportions of 1:1:0.1:0.5:3:5 by weight;
(b) 0.001 ppm to 50 ppm, in particular 0.005 ppm to 10 ppm, more particularly 0.05 ppm to 5 ppm, for example approximately 1 ppm, relative to the total weight of the composition, of a component (b) selected from 2-propylthietane, 2,5-dihydro-2,4,5-trimethylthiazoline, and 4,5-dihydro-2-sec-butyl-thiazoline; and
(c) one or more solvents, in particular selected from water, ethanol, isopropanol, and mixtures thereof.

8. The composition according to any of claims 1 to 5, comprising:
(a) 6.0% to 12.0%, particularly about 10.0%, by weight, relative to the total weight of the composition, of a mixture of capric acid, ethyl laurate or lauric acid, ethyl myristate, ethyl pentadecanoate, ethyl palmitate, ethyl oleate, and ethyl linoleate, preferably in proportions of 1:2:8:6:20:20:20 by weight;
(b) 100 ppm to 5000 ppm, in particular 500 ppm to 2000 ppm, for example approximately 1000 ppm, relative to the total weight of the composition, of a component (b) selected from 2-phenylethylamine, pyrazines substituted with 1, 2, 3 or 4 (C₁-C₆)alkyl groups, and mixtures thereof, in particular selected from 2-phenylethylamine, 2,5-dimethylpyrazine, 2,6-dimethylpyrazine, 2,3,5-trimethylpyrazine, 3-ethyl-2,5-dimethylpyrazine, 2,3-dimethylpyrazine, 2,3-dimethyl-5-ethylpyrazine, and mixtures thereof; and
(c) one or more solvents, in particular selected from water, ethanol, isopropanol, and mixtures thereof.

9. The composition according to any of claims 1 to 5, comprising:
(a) 6.0% to 12.0%, in particular approximately 10.0%, by weight, relative to the total weight of the composition, of a mixture of capric acid, ethyl laurate or lauric acid, ethyl myristate, ethyl pentadecanoate, ethyl palmitate, ethyl oleate, and ethyl linoleate, preferably in proportions of 1:2:8:6:20:20:20 by weight;
(b) 0.001 ppm to 50 ppm, in particular 0.005 ppm to 10 ppm, more particularly 0.05 ppm to 5 ppm, for example approximately 1 ppm, relative to the total weight of the composition, of a component (b) selected from 2-propylthietane, 2,5-dihydro-2,4,5-trimethylthiazoline, and 4,5-dihydro-2-*sec*-butyl-thiazoline.
(c) one or more solvents, in particular selected from water, ethanol, isopropanol, and mixtures thereof.

10. Article impregnated with a composition according to any of claims 1 to 9.

11. Method for preparing an impregnated article according to claim 10, comprising impregnating the article with a composition according to any of claims 1 to 9, preferably comprising one or more solvents.

12. Use of a composition according to any of claims 1 to 9 or an impregnated article according to claim 10 for controlling rodents.

13. A method for controlling rodents comprising:
(1) applying a composition C₁ according to any of claims 1 to 9 or placing an article impregnated with a composition C₁ according to any of claims 1 to 9 in a space or on an object to be protected against rodents; and
(2) optionally repeating step (1) one or more times within 1 to 90 days, preferably 7 to 35 days, after the previous step.

14. The method according to claim 13, wherein step (2) is implemented and comprises N-1 repetition(s) each performed independently with a composition Cᵢ according to any of claims 1 to 9 or an article impregnated with a composition Cᵢ according to any of claims 1 to 9, preferably with N being an integer from 2 to 12, in particular from 2 to 8, preferably from 2 to 5, for example 4,
the pheromone mixture consisting of pheromone (a) and component (b) of each of compositions C₁ to C_{N} being different from one composition to another.

15. The method according to claim 14, wherein at least one of compositions C₁to C_{N} comprises a component (b) selected from 2-phenylethylamine, pyrazines substituted with 1, 2, 3, or 4 (C₁-C₆)alkyl groups, and mixtures thereof, in particular selected from 2-phenylethylamine, 2,5-dimethylpyrazine, 2,6-dimethylpyrazine, 2,3,5-trimethylpyrazine, 3-ethyl-2,5-dimethylpyrazine, 2,3-dimethylpyrazine, 2,3-dimethyl-5-ethylpyrazine, and mixtures thereof, and preferably is a composition according to claim 6 or 8; and
wherein at least one other of compositions C₁ to C_{N} comprises a component (b) selected from 2-propylthietane, 2,5-dihydro-2,4,5-trimethylthiazoline, and 4,5-dihydro-2-*sec-*butyl-thiazoline, and preferably is a composition according to claim 7 or 9.

16. The method according to claim 14 or 15, wherein N is equal to 4, compositions C₁ to C₄ are different from each other and are respectively a composition according to claim 6, a composition according to claim 7, a composition according to claim 8, and a composition according to claim 9.

17. The method according to any of claims 13 to 15, wherein steps (1) and (2) are repeated one or more times.

18. Kit comprising:
- at least two compositions according to any one of claims 1 to 9, the pheromone mixture consisting of pheromone (a) and component (b) of each of the compositions being different from one composition to another, or
- several impregnated articles according to claim 10, at least two articles being impregnated with a pheromone mixture consisting of pheromone (a) and component (b), which is different from one article to another.
